(19) Europäisches Patentamt
European Patent Office
Office européen des brevets

(11) EP 4 414 396 A1

(12) **EUROPEAN PATENT APPLICATION**
published in accordance with Art. 153(4) EPC

(43) Date of publication:
**14.08.2024 Bulletin 2024/33**

(21) Application number: **22878254.6**

(22) Date of filing: **06.09.2022**

(51) International Patent Classification (IPC):
***C08F 299/08*** (2006.01) ***C08G 77/38*** (2006.01)
***C08G 77/445*** (2006.01)

(52) Cooperative Patent Classification (CPC):
**C08F 299/08; C08G 77/38; C08G 77/445**

(86) International application number:
**PCT/JP2022/033359**

(87) International publication number:
**WO 2023/058383 (13.04.2023 Gazette 2023/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.10.2021 JP 2021163786**

(71) Applicant: **SHIN-ETSU CHEMICAL CO., LTD.**
**Tokyo 1000005 (JP)**

(72) Inventors:
- **OKABE Shoji**
  **Annaka-shi, Gunma 379-0224 (JP)**
- **OKI Takahito**
  **Annaka-shi, Gunma 379-0224 (JP)**
- **INOKUCHI Yoshinori**
  **Annaka-shi, Gunma 379-0224 (JP)**
- **TAKEWAKI Kazuyuki**
  **Annaka-shi, Gunma 379-0224 (JP)**
- **AOKI Shunji**
  **Annaka-shi, Gunma 379-0224 (JP)**

(74) Representative: **Angerhausen, Christoph**
**Boehmert & Boehmert**
**Anwaltspartnerschaft mbB**
**Pettenkoferstrasse 22**
**80336 München (DE)**

# (54) RUBBER PARTICLES, COMPOSITE PARTICLES, AND MANUFACTURING METHODS THEREFOR

(57) Provided are polysiloxane structure-containing rubber particles and composite particles having a high degradability; and manufacturing methods therefor. The rubber particles are comprised of a copolymer containing a structural unit derived from (A) a silicone-polyester copolymer having at least two radically polymerizable unsaturated groups per molecule. The composite particles are those with the surfaces of these rubber particles being coated with polyorganosilsesquioxane and/or silica.

EP 4 414 396 A1

## Description

### Technical field

The present invention relates to rubber particles, composite particles, and manufacturing methods therefore.

### Background art

Silicone rubber particles having rubber elasticity are used as a stress reliever for resins. For example, in the case of a heat-curable resin such as an epoxy resin used for packaging of electronic and electric parts, rubber particles are often added to make it less likely for a package to break even when it is subjected to a stress upon expansion due to a heat generated by an electric part. Further, rubber particles are also used in cosmetic materials for the purpose of imparting an extensibility and a feeling of use such as a soft sense of touch and a smoothness.

As silicone rubber particles, there are also proposed, for example, composite particles with silicone rubber particles being coated with a polyorganosilsesquioxane resin (Patent document 1: JP-A-07-196815); and composite particles with silicone rubber particles being coated with metal oxide fine particles such as silica (Patent document 2: JP-A-04-348143). These composite particles are characterized by having a low agglomeration property and a high dispersibility.

As particles having a favorable dispersibility with respect to a thermoplastic resin or the like, Patent document 3: JP-A-2001-40214 discloses organic crosslinked rubber particles prepared by crosslinking a liquid composition comprised of an aliphatic saturated bond-containing organic compound with a silicon-containing organic compound having silicon atom-bonded hydrogen atoms via hydrosilylation reaction.

Further, Patent document 4: JP-A-10-182987 discloses a method of preparing siliconecontaining rubber particles by copolymerizing, in an emulsion system, a (meth)acrylic acid ester and a diorganopolysiloxane (silicone macromonomer) having, at one end, an organic group containing a radically polymerizable functional group. These particles are used for the purpose of imparting slipperiness to thermoplastic resins.

### Prior art documents

### Patent documents

Patent document 1: JP-A-07-196815
Patent document 2: JP-A-04-348143
Patent document 3: JP-A-2001-40214
Patent document 4: JP-A-10-182987

### Summary of the invention

### Problems to be solved by the invention

However, such silicone particles that are to be added to for example resins and cosmetic materials have extremely small particle sizes; when discarded in the environment, it is assumed that they will directly flow into the ocean through inland water as it is tremendously difficult to collect them. The silicone particles discarded in inland water or the ocean are not environmentally degradable as they do not have a degradation structure in the particle structure thereof; it is predicted that these particles will persistently remain in the environment.

In addition, there have been movements to restrict microplastics as microplastics in the ocean have a property of adsorbing pathogens and hazardous substances in the environment, which leads to a concern that the ecosystem will be negatively impacted. Due to such background, there is a gradual demand for a type of silicone rubber particles that are degradable and do not persistently remain as particles (solid) in the environment after use. In order for silicone rubber particles to be environmentally degraded, the crosslinked structure of the rubber particles needs to be degraded (broken) in the environment; however, since silicone rubber particles structurally do not have a degradability, a degradable functional group-containing structure has to be introduced into the crosslinked structure.

Specifically disclosed in Patent document 3 are particles prepared by crosslinking a polypropylene oxide having an allyl group at both ends with an organopolysiloxane having silicon atom-bonded hydrogen atoms; and particles prepared by crosslinking hexadiene with dimethylpolysiloxane-methylhydrogenpolysiloxane. These particles have a poor degradability as they do not have a degradable functional group(s) serving as a factor allowing them to be degraded in

the environment.

Thus, it is an object of the present invention to provide polyorganosiloxane structure-containing rubber particles and composite particles having a high degradability; and manufacturing methods therefor.

Means to solve the problems

The inventors of the present invention diligently conducted a series of studies to achieve the above object, and completed the invention as follows. That is, the inventors found that the above problems can be solved by a rubber particle and a composite particle having specific polyester and polyorganosiloxane structures.

Thus, the present invention is to provide the following rubber particle, composite particle and manufacturing methods therefor.

<1>. A rubber particle comprised of a polymer containing a structural unit derived from (A) a silicone-polyester copolymer having at least two radically polymerizable unsaturated groups per molecule.

<2>. The rubber particle according to <1>, wherein (A) the silicone-polyester copolymer having at least two radically polymerizable unsaturated groups per molecule is represented by the general formula (1):

[Chemical formula 1]

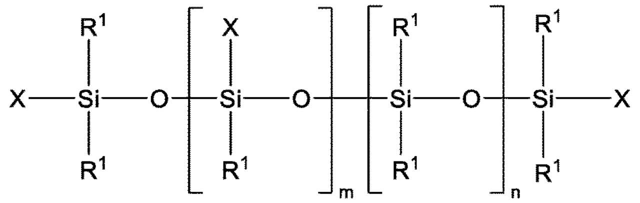

— (1)

wherein in the formula (1), each $R^1$ independently represents a substituted or unsubstituted monovalent hydrocarbon group having 1 to 30 carbon atoms, m is a number satisfying $0 \leq m \leq 1{,}000$, n is a number satisfying $0 \leq n \leq 1{,}000$, and each X independently represents a polyester structure-containing group represented by the general formula (2), (2') or (3):

[Chemical formula 2]

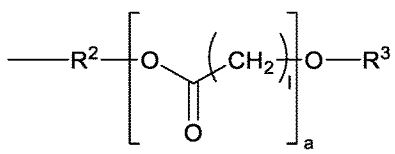

— (2)

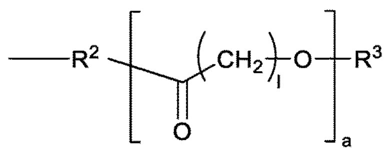

— (2')

wherein in the formulae (2) and (2'), each $R^2$ independently represents a substituted or unsubstituted aliphatic hydrocarbon group that has 1 to 10 carbon atoms and optionally contains a hetero atom, a is a number satisfying

$1 \leq a \leq 30$, 1 is a number satisfying $1 \leq 1 \leq 10$, and $R^3$ represents a radically polymerizable functional group-containing organic group represented by the general formula (4a), (4b), (4c) or (4d);

[Chemical formula 3]

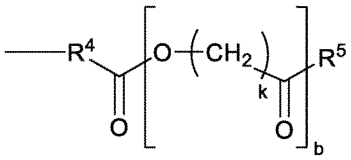

— (3)

wherein in the formula (3), $R^4$ represents a substituted or unsubstituted aliphatic group that has 1 to 10 carbon atoms and optionally contains a hetero atom, b is a number satisfying $1 \leq b \leq 30$, k is a number satisfying $1 \leq k \leq 10$, and $R^5$ represents a radically polymerizable functional group-containing organic group represented by the general formula (5a) or (5b);

[Chemical formula 4]

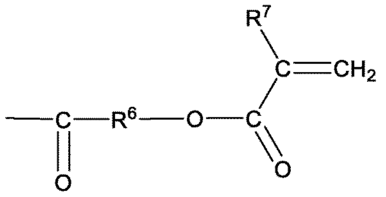

— (4 a)

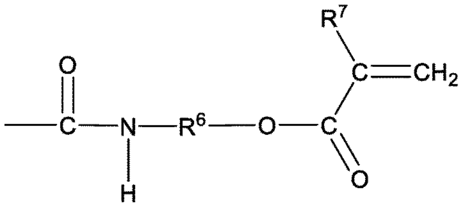

— (4 b)

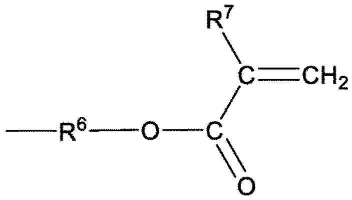

— (4 c)

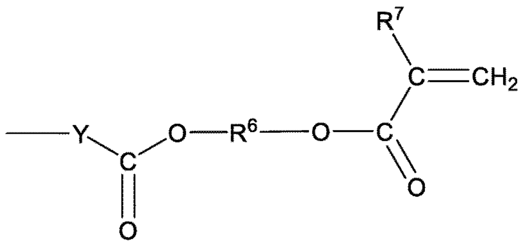

— (4 d)

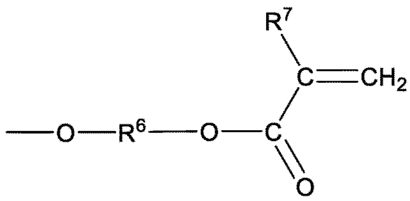

— (5 a)

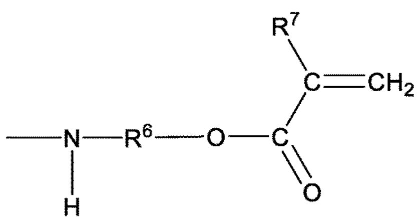

— (5 b)

wherein in the formulae (4a), (4b), (4c), (4d), (5a) and (5b), each $R^6$ independently represents a substituted or unsubstituted hydrocarbon group that has 1 to 20 carbon atoms and optionally contains a hetero atom, $R^7$ represents a hydrogen atom or a hydrocarbon group having 1 to 3 carbon atoms, and Y represents a hydrocarbon group that has 1 to 40 carbon atoms and optionally contains a hetero atom.

<3>. The rubber particle according to <1> or <2>, wherein (A) the silicone-polyester copolymer having at least two radically polymerizable unsaturated groups per molecule is represented by the general formula (6):

[Chemical formula 5]

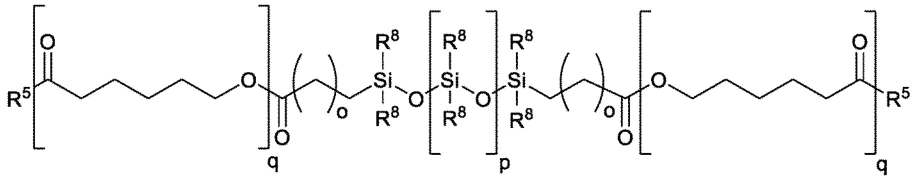

— (6)

wherein in the formula (6), each $R^8$ independently represents a substituted or unsubstituted monovalent hydrocarbon group having 1 to 30 carbon atoms, o is a number satisfying $0 \leq o \leq 10$, p is a number satisfying $0 \leq p \leq 1000$, q is a number satisfying $1 \leq q \leq 30$ and each $R^5$ independently represents a radically polymerizable functional group-containing organic group represented by the formula (5a) or (5b):

[Chemical formula 6]

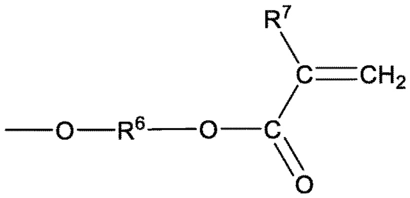

— (5 a)

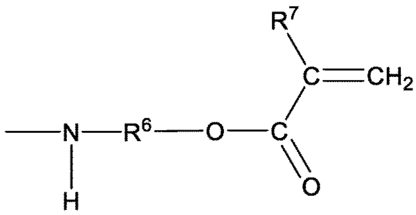

— (5 b)

.

<4>. The rubber particle according to any one of <1> to <3>, wherein the rubber particle has a spherical shape and a volume average particle size of 0.1 to 50 $\mu$m.

<5>. A composite particle with the surface of the rubber particle according to any one of <1> to <4> being coated with polyorganosilsesquioxane and/or silica.

<6>. A method for manufacturing the rubber particle according to any one of <1> to <4>, comprising the steps of:

(i) adding, for emulsification, a surfactant-containing water phase component to an oil phase component that contains (A) the silicone-polyester copolymer having at least two radically polymerizable unsaturated groups per molecule to obtain an O/W type emulsion;
(ii) radically polymerizing the component (A) in the oil phase component of the emulsion under the presence of (B) a radical polymerization initiator to cure the component (A) to obtain (C) a rubber particle water dispersion; and
(iii) drying and removing water, as a continuous phase, from (C) the rubber particle water dispersion obtained in the step (ii) to obtain the rubber particle.

<7>. A method for manufacturing the composite particle according to <5>, comprising the steps of:

(i) adding, for emulsification, a surfactant-containing water phase component to an oil phase component that contains (A) the silicone-polyester copolymer having at least two radically polymerizable unsaturated groups per molecule to obtain an O/W type emulsion;
(ii) radically polymerizing the component (A) in the oil phase component of the emulsion under the presence of (B) a radical polymerization initiator to cure the component (A) to obtain (C) a rubber particle water dispersion;

(iii') adding (E) an alkaline substance to (C) the rubber particle water dispersion obtained in the step (ii);
(iv) adding, to the rubber particle water dispersion obtained in the step (iii') in which the alkaline substance has been compounded, (F) at least one kind selected from an organotrialkoxysilane, a tetraalkoxysilane, and hydrolysates thereof whereby a condensation reaction is caused to allow the surface of the rubber particle to be coated with polyorganosilsesquioxane and/or silica to obtain a composite particle water dispersion, the organotrialkoxysilane and the tetraalkoxysilane being respectively represented by the following general formulae (7) and (8):

[Chemical formula 7]

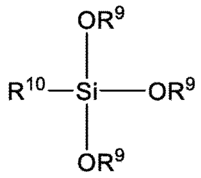

— (7)

wherein in the formula (7), each $R^9$ independently represents an alkyl group having 1 to 6 carbon atoms and $R^{10}$ represents a substituted or unsubstituted monovalent hydrocarbon group having 1 to 20 carbon atoms, and in the formula (8):

$$Si(OR^{11})_4 - \qquad (8)$$

each $R^{11}$ independently represents a monovalent hydrocarbon group having 1 to 6 carbon atoms; and
(v) drying and removing water, as a continuous phase, from the composite particle water dispersion obtained in the step (iv) to obtain a composite particle.

Effects of the invention

The rubber particle and composite particle of the present invention have a degradability as they contain polyester structures as degradable functional groups and a crosslinked structure will be broken in a water-bearing environment. Particularly, in terms of the polyester structure in the particles, particles having a poly($\varepsilon$-caprolactone) structure as a microbial recognition skeleton can also be expected to possess an environmental degradability of rubber particles.
In this way, the rubber particles and composite particles of the present invention are particles having a high degradability; the rubber particles and composite particles of the present invention are anticipated as an environmental load-reducing material.

Brief description of the drawings

[Fig. 1] FIG. 1 is an SEM photomicrograph of the rubber particles obtained in the working example 5
[Fig. 2] FIG. 2 is an SEM photomicrograph of the composite particles obtained in the working example 6.

Mode for carrying out the invention

The present invention is described in detail hereunder.
The rubber particle of the present invention is a rubber particle comprised of a polymer containing a structural unit derived from a silicone-polyester copolymer (A) having at least two radically polymerizable unsaturated groups per molecule, wherein the composite particle of the present invention is a particle prepared by coating the surface of the aforesaid rubber particle with polyorganosilsesquioxane and/or silica. The wording "(A) a silicone-polyester copolymer having at least two radically polymerizable unsaturated groups per molecule" as used herein may be referred to as component (A) in short.

[Rubber particles]

There are no particular limitations on the shape of the rubber particles of the present invention; a spherical shape is preferable. In the present invention, the term "spherical" not only refers to a state where the particle shape is

a true sphere, but also encompasses a state where the particle shape is a deformed ellipsoidal body whose aspect ratio (length of major axis/length of minor axis) is normally 1 to 4, preferably 1 to 2, more preferably 1 to 1.6, even more preferably 1 to 1.4, on average. The shape of the particles can for example be confirmed by conducting observation using an optical microscope or an electron microscope; and the aspect ratio is a value calculated as an average value after measuring the lengths of the major and minor axes of any 100 particles shown in a micrograph.

A volume average particle size of the rubber particles is preferably 0.1 to 50 μm, more preferably 0.5 to 40 μm, even more preferably 1 to 20 μm. When the volume average particle size of the rubber particles is smaller than 0.1 μm, the particles will exhibit a low fluidity and thereby a higher agglomeration property. Further, when performing coating with polyorganosilsesquioxane and/or silica, it will be difficult to uniformly coat the particles. A volume average particle size of the rubber particles larger than 50 μm will result in a deteriorated smoothness, or may lead to a feeling of roughness. In the present invention, a particle size is a volume average particle size measured by an electrical resistivity method.

It is preferred that a rubber as a component of the rubber particles have no tackiness, and that a rubber hardness thereof be 5 to 90, more preferably 20 to 85, even more preferably 40 to 85, when measured by ASKER Durometer Type C as prescribed in The Society of Rubber Industry, Japan Standard (SRIS). A rubber hardness lower than 5 will result in a higher agglomeration property and a poor dispersibility accordingly. Further, a rubber hardness exceeding 90 may deteriorate the soft texture.

It is preferred that the rubber particle of the present invention be a particle prepared by radically polymerizing a liquid composition, containing (A) a silicone-polyester copolymer having at least two radically polymerizable unsaturated groups per molecule, under the presence of (B) a radical polymerization initiator.

It is preferred that a polyester structure of the silicone-polyester copolymer (A) having at least two radically polymerizable unsaturated groups per molecule preferably be of aliphatic polyester which is considered as having a higher degradability. Examples of the aliphatic polyester include poly(ε-caprolactone), poly(β-propiolactone), γ-butyrolactone, polylactic acid, polyhydroxybutyrate, polyglycolic acid, polyethylene adipate, polyhydroxybutyric acid, polyethylene succinate and polybutylene succinate among which a structure of poly(ε-caprolactone) is preferred in terms of degradability and handleability.

It is preferred that the silicone-polyester copolymer (A) having at least two radically polymerizable unsaturated groups per molecule preferably have a structure expressed by the following formula (1). In the formula (1), each $R^1$ independently represents a substituted or unsubstituted monovalent hydrocarbon group having 1 to 30 carbon atoms, each X independently represents a polyester-structure-containing group represented by the formula (2), (2') or (3), and m and n are numbers respectively satisfying $0 \leq m \leq 1{,}000$ and $0 \leq n \leq 1{,}000$.

[Chemical formula 8]

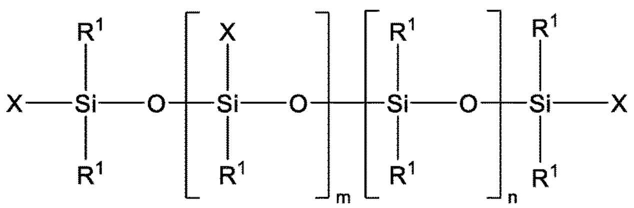

— (1)

Examples of $R^1$ include alkyl groups such as a methyl group, an ethyl group, a propyl group, a butyl group, a pentyl group, a hexyl group, a heptyl group, an octyl group, a decyl group, an undecyl group, a dodecyl group, a tetradecyl group, a pentadecyl group, a hexadecyl group, a heptadecyl group, an octadecyl group, a nonadecyl group, an icosyl group, a henicosyl group, a docosyl group, a tricosyl group, a tetracosyl group, and a triacontyl group; aryl groups such as a phenyl group, a tolyl group, and a naphthyl group; aralkyl groups such as a benzyl group and a phenethyl group; cycloalkyl groups such as a cyclopentyl group, a cyclohexyl group, and a cycloheptyl group; and hydrocarbon groups obtained by substituting part of or all the carbon atom-bonded hydrogen atoms in any of these groups with atoms such as halogen atoms (fluorine atom, chlorine atom, bromine atom, iodine atom) and/or with substituent groups such as an acryloyloxy group, methacryloyloxy group, epoxy group, glycidoxy group and carboxyl group.

X is a polyester structure-containing group represented by the following general formula (2), (2') or (3).

[Chemical formula 9]

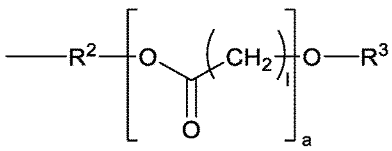

— (2)

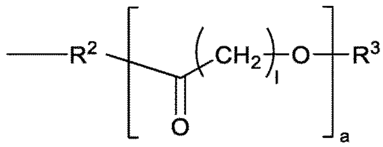

— (2')

In the formulae (2) and (2'), each $R^2$ represents a substituted or unsubstituted aliphatic group that has 1 to 10 carbon atoms and optionally contains a hetero atom, and specifically is a residue of a modified silicone that contains an active hydrogen and is a starting material for manufacturing the component (A) to be described below. The aliphatic group represented by $R^2$ having 1 to 10 carbon atoms is preferably an aliphatic hydrocarbon group having 1 to 10 carbon atoms, and is more preferably an alkylene group represented by $-(CH_2)_x-$, where x is an integer of 1 to 10. When the aliphatic group contains a hetero atom, an example of such includes a group in which a part of carbon atoms in the aliphatic hydrocarbon group is substituted by at least one kind of heteroatom(s) such as oxygen atom and nitrogen atom. In the formulae (2) and (2'), each $R^3$ independently represents a radically polymerizable functional group-containing organic group represented by the general formula (4a), (4b), (4c) or (4d). Further, in the formulae (2) and (2'), each "a" independently satisfies $1 \leq a \leq 30$, preferably $2 \leq a \leq 10$. In the formulae (2) and (2'), each "l" independently satisfies $1 \leq l \leq 10$, preferably $1 \leq l \leq 6$.

[Chemical formula 10]

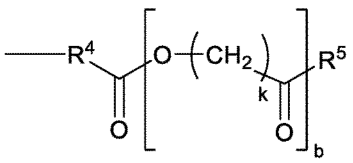

— (3)

In the formula (3), $R^4$ represents a substituted or unsubstituted aliphatic group that has 1 to 10 carbon atoms and optionally contains a hetero atom, and specifically is a residue of a modified silicone that contains an active hydrogen and is a starting material for manufacturing the component (A) to be described below. The aliphatic group represented by $R^4$ having 1 to 10 carbon atoms is preferably an aliphatic hydrocarbon group having 1 to 10 carbon atoms, and is more preferably an alkylene group represented by $-(CH_2)_x-$, where x is an integer of 1 to 10. When the aliphatic group contains a hetero atom, an example of such includes a group in which a part of carbon atoms in the aliphatic hydrocarbon group is substituted by at least one kind of heteroatom(s) such as oxygen atom and nitrogen atom.

In the formula (3), $R^5$ represents a radically polymerizable functional group-containing organic group represented by the following formula (5a) or (5b).

Further, in the formula (3), "b" satisfies $1 \leq b \leq 30$, preferably $2 \leq b \leq 10$. In the formula (3), "k" satisfies $1 \leq k \leq 10$, preferably $1 \leq k \leq 6$.

[Chemical formula 11]

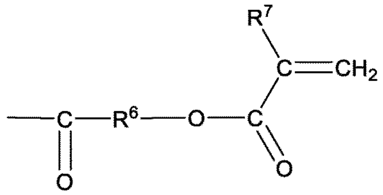

-(4a)

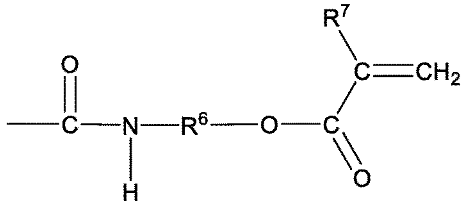

-(4b)

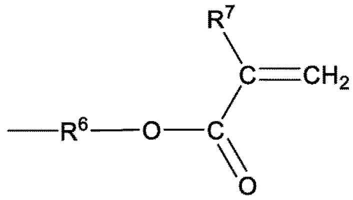

-(4c)

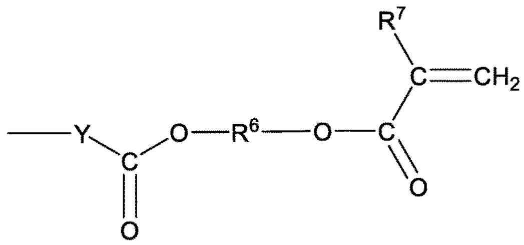

-(4d)

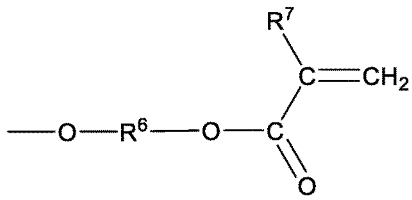

-(5a)

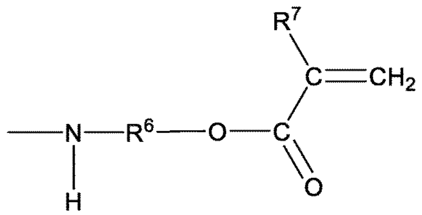

-(5b)

In the formulae (4a), (4b), (4c), (4d), (5a) and (5b), each $R^6$ independently represents a substituted or unsubstituted hydrocarbon group that has 1 to 20 carbon atoms and optionally contains a hetero atom, and specifically is a residue derived from any of the following polymerizable monomers. Examples of the polymerizable monomers include hydroxyl group-containing (meth)acrylic esters and isocyanate group-containing (meth)acrylic esters as indicated below.

Examples of the hydroxyl group-containing (meth)acrylic ester include hydroxyalkyl esters of (meth)acrylic acid having 2 to 8 carbon atoms such as hydroxyethyl (meth)acrylic ester and hydroxypropyl (meth)acrylic ester; and carboxy(meth)acrylates such as carboxyethyl acrylate, (meth)acryloyloxyethyl succinate, and (meth)acryloyloxyethyl phthalate.

Examples of the isocyanate group-containing monomer include, for example, isocyanate ethyl (meth)acrylate ester, isocyanate propyl (meth)acrylate ester, isocyanate butyl (meth)acrylate ester, and isocyanate hexyl (meth)acrylate ester.

The hydrocarbon group represented by $R^6$ having 1 to 20 carbon atoms is preferably an aliphatic hydrocarbon group having 1 to 8 carbon atoms, and is more preferably an alkylene group represented by $-(CH_2)_y-$, where y is an integer of 1 to 8. When the aliphatic group contains a hetero atom, an example of such includes a group in which a part of carbon atoms in the hydrocarbon group is substituted by at least one kind of heteroatom(s) such as oxygen atom and nitrogen atom.

In the formulae (4a), (4b), (4c), (4d), (5a) and (5b), $R^7$ represents a hydrogen atom or a hydrocarbon group having 1 to 3 carbon atoms. Examples of the hydrocarbon group having 1 to 3 carbon atoms include, for example, a methyl group, an ethyl group and a propyl group, and $R^7$ is preferably a hydrogen atom or a methyl group.

In the formulae (4a), (4b), (4c), (4d), (5a) and (5b), Y represents a hydrocarbon group that has 1 to 40 carbon atoms and optionally contains a hetero atom This aliphatic group is preferably an aliphatic hydrocarbon group having 1 to 30 carbon atoms, and specifically is a residue induced from a dicarboxylic acid as listed below.

Examples of the dicarboxylic acid include aliphatic dicarboxylic acids such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, hexadecanedioic acid, octadecanedioic acid , eicosandioic acid, methylsuccinic acid, dimethylmalonic acid, 3-methylglutaric acid, ethylsuccinic acid, isopropylmalonic acid, 1,3-cyclopentanedicarboxylic acid, 1,2-cyclopentanedicarboxylic acid, 1,4-cyclohexanedicarboxylic acid , 1,2-cyclohexane dicarboxylic acid, 1,3-cyclohexane dicarboxylic acid, 1,4-cyclohexane diacetic acid, 1,3-cyclohexane diacetic acid, 1,2-cyclohexane diacetic acid, 1,1-cyclohexane diacetic acid, dimer acids, maleic acid, fumaric acid; and aromatic dicarboxylic acids such as phthalic acid, terephthalic acid, isophthalic acid, phenylmalonic acid, homophthalic acid, phenylsuccinic acid, β-phenylglutaric acid, α-phenyladipic acid, β-phenyladipic acid, biphenyl-2,2'-dicarboxylic acid, biphenyl- 4,4'-dicarboxylic acid, and naphthalene dicarboxylic acid.

[Manufacturing method of component (A)]

An example method for manufacturing the component (A) includes a method of introducing a polymerizable monomer having a radically polymerizable unsaturated group via, for example, an ester bond, an ether bond, a urethane bond, a urea bond or an amide bond to a poly(ε-caprolactone)-modified silicone which is obtained by subjecting a cyclic ε-caprolactone to ring-opening polymerization, where the modified silicone is obtained from, as a starting material, a modified silicone containing an active hydrogen such as a carbinol-modified silicone, a carboxy-modified silicone and an amino-modified silicone. As an examples of the polymerizable monomer having a radically polymerizable unsaturated group, it is preferred that the monomer be a hydroxyalkyl ester of methacrylic acid that is superior in availability, cost effectiveness, and stability and reaction rate at the time of reaction. Examples of the reaction condition for this manufacturing method include, but are not limited to, the manufacturing methods as described below. For example, 4 equivalents of ε-caprolactone are added to one equivalent of modified silicone, containing an active hydrogen, such as a carbinol-modified silicone, to bring about a reaction for 2 hours at 110°C under a known ring-opening polymerization catalyst to obtain the ε-caprolactone-modified silicone. 1.0 to 1.25 mol of hydroxyl group in the hydroxyalkyl ester of methacrylic acid having 2 to 8 carbon atoms and 0.1 to 5.0 mol of esterification catalyst are mixed into one mol of carboxy group in the obtained ε-caprolactone-modified silicone, which is then stirred at 5 to 150 °C for 10 to 30 minutes (the temperature is selected in accordance with the catalyst to be used). A dehydration-condensation agent may optionally be added thereinto in an amount of 1.0 to 1.25 mol to bring about a reaction for 5 to 30 hours at 15 to 150°C. After the reaction is over, the reaction product is subjected to a filtration, water washing and/or adsorption step(s) to have a by-product removed and the solvent distilled away, thus obtaining the component (A).

Examples of the component (A) when a carbinol-modified silicone is used as a starting material include those represented by the following formulae (9a) to (9c) where only one end is represented because the structure is symmetric.

[Chemical formula 12]

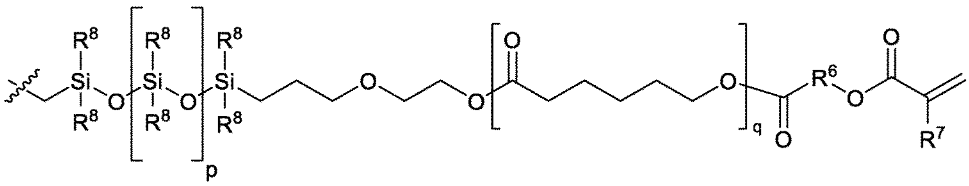

— (9 a)

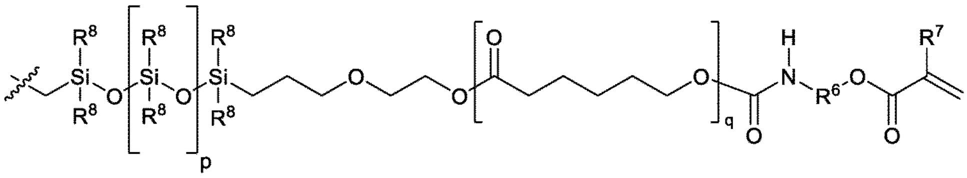

— (9 b)

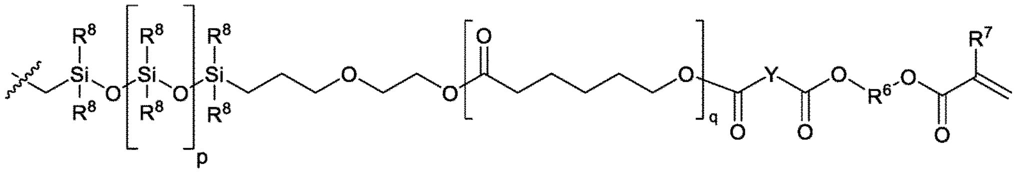

— (9 c)

In the formulae (9a) to (9c), each $R^8$ independently represents a substituted or unsubstituted monovalent hydrocarbon group having 1 to 30 carbon atoms. Examples of the monovalent hydrocarbon group having 1 to 30 carbon atoms include those identical to those as listed for $R^1$, and preferable example of it is a methyl group. Y represents a hydrocarbon group that has 1 to 40 carbon atoms and optionally contains a hetero atom, and specific examples of it include those identical to the above-listed examples in the formula (4d). The "p" and "q" respectively satisfy $0 \leq p \leq 1000$ and $1 \leq q \leq 30$, preferably $1 \leq p \leq 500$ and $2 \leq q \leq 10$.

Examples of the component (A) when a carboxy-modified silicone is used as a starting material include the one represented by the following formula (10) where only one end is represented because the structure is symmetric.

[Chemical formula 13]

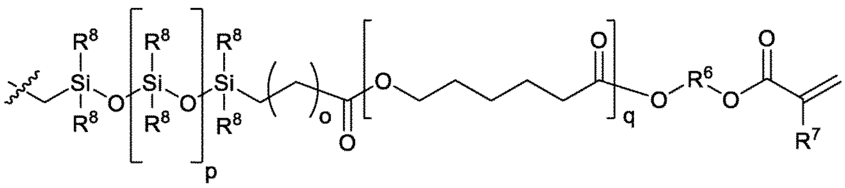

— (1 0)

In the formula (10), each $R^8$ independently represents a substituted or unsubstituted monovalent hydrocarbon group having 1 to 30 carbon atoms. Examples of the monovalent hydrocarbon group having 1 to 30 carbon atoms include those identical to those as listed for $R^1$, and preferable example of it is a methyl group. The "o", "p" and "q" respectively satisfy $0 \leq o \leq 10$, $0 \leq p \leq 1000$ and $1 \leq q \leq 30$, and preferably $1 \leq o \leq 10$, $1 \leq p \leq 500$ and $2 \leq q \leq 10$.

Examples of the component (A) when an amino-modified silicone is used as a starting material include those represented by the following formulae (11a) to (11f) where only one end is represented because the structure is symmetric.

[Chemical formula 14]

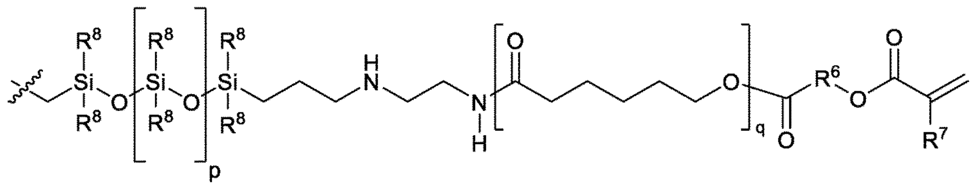

— (11a)

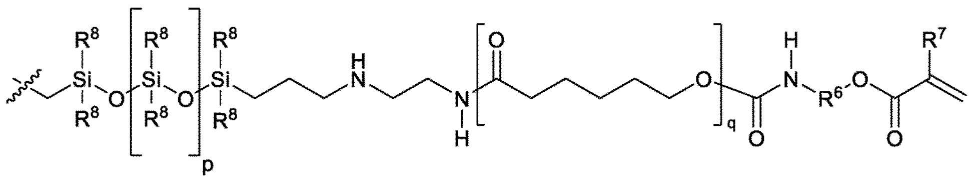

— (11b)

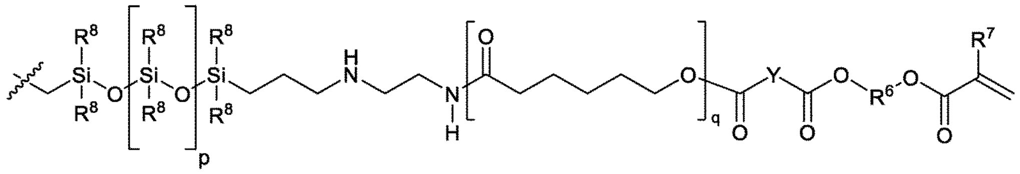

— (11c)

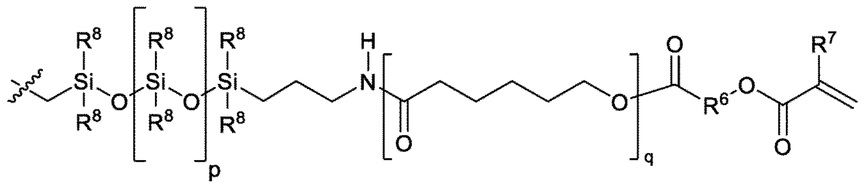

— (11d)

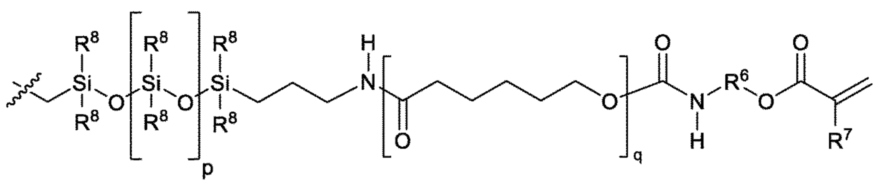

— (11e)

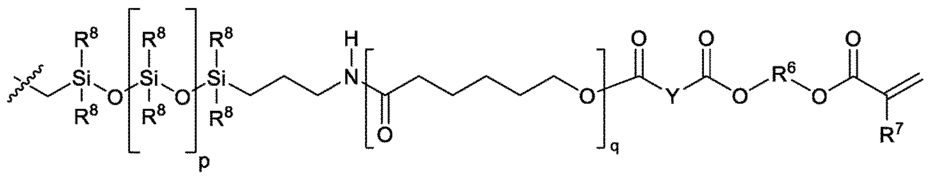

— (11f)

In the formulae (11a) to (11f), each $R^8$ independently represents a substituted or unsubstituted monovalent hydrocarbon group having 1 to 30 carbon atoms. Examples of the monovalent hydrocarbon group having 1 to 30 carbon atoms include those identical to those as listed for $R^1$, and preferable example of it is a methyl group. Y represents a hydrocarbon group that has 1 to 40 carbon atoms and optionally contains a hetero atom, and specific examples of it include those identical to the above-listed examples in the formula (4d). The "p" and "q" respectively satisfy $0 \leq p \leq 1000$ and $1 \leq q \leq 30$, preferably $1 \leq p \leq 500$ and $2 \leq q \leq 10$.

Another example method for manufacturing the component (A) includes a method of esterizing the above-listed carboxy-modified silicone with the poly(ε-caprolactone)-modified (meth)acrylate as shown in the following formula (12). Examples of the poly- ε-caprolactone-modified (meth)acrylate that are commercially available include, for example, PLACCEL FA2D, PLACCEL FA4DT, PLACCEL FA10L, PLACCEL FM2D and PLACCEL FM4 (which are all manufactured by Daicel Corporation).

[Chemical formula 15]

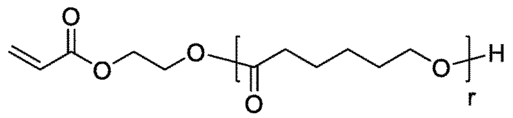

— (1 2)

where r is a number satisfying 1 ≤ r ≤ 10.

Examples of the manufacturing method of the component (A) using this poly(ε- caprolactone)-modified (meth)acrylate includes, but is not limited to, the manufacturing methods as described below. 1.0 to 1.25 mol of hydroxyl group in the poly(ε-caprolactone)-modified (meth)acrylate (of the formula (12)) and 0.1 to 5.0 mol of esterification catalyst are mixed into one mol of carboxy group in the carboxy-modified silicone component, which is then stirred at 5 to 150°C for 10 to 30 minutes (the temperature is selected in accordance with the catalyst to be used). A dehydration-condensation agent may optionally be added thereinto in an amount of 1.0 to 1.25 mol to bring about a reaction for 5 to 30 hours at 15 to 150°C. After the reaction is over, the reaction product is subjected to a filtration, water washing and/or adsorption step(s) to have a by-product removed and the solvent distilled away, thus obtaining the component (A).

During the esterification reaction, any esterification catalyst may be used without particularly being limited to. Examples of the esterification catalyst include Lewis acid catalysts such as alcoholates, carboxylates, or chelate compounds of titanium, zirconium, tin, aluminum and zinc, and boron trifluorides and boron trifluoride etherates; acid catalysts such as hydrochloric acid, sulfuric acid, hydrogen bromide, acetic acid, trifluoroacetic acid, methanesulfonic acid and p-toluenesulfonic acid; and amine-based catalysts such as pentamethyldiethylenetriamine (PMDETA), trimethyltriazacyclononane (TMTACN), triethylamine (TEA), 4-(N,N-dimethylamino)pyridine (DMAP), 1,4-diazabicyclo(2.2.2)octane (DABCO) and tetramethylethylenediamine (TMEDA), among which amine-based catalysts are preferable in terms of stability of the products obtained through the esterification reaction and in respect of economical consideration.

When an amine-based catalyst is used, a dehydration-condensation agent may be added for enhancing reaction efficiency. A known dehydration-condensation agent may be used for the dehydration-condensation agent, and examples of it include, but are not particularly limited to, 1,1'-carbonyldiimidazole (CDI), N,N'-dicyclohexylcarbodiimide (DCC), N,N'-diisopropylcarbodiimide (DIC), 1-ethyl-3-(3-dimethylaminopropyl)-carbodiimide (EDC), 1-ethyl-3-(3-dimethylaminopropyl)-carbodiimide hydrochloride (EDC·HCl) and 1-[bis(dimethylamino)methylene]-1H-1,2,3-triazolo[4, 5-b]pyridinium 3-oxide hexafluorophosphate (HATU).

The method of subjecting the reaction product to a filtration, water washing and/or adsorption step(s) to have a by-product removed and the solvent distilled away may be performed in accordance with a conventional method, and a hydrophobic organic solvent may be used in the filtration step to adjust the viscosity of the reaction product. Preferable examples of the hydrophobic organic solvent include, but are not particularly limited to, toluene, hexane and ethyl acetate in terms of, for example, solubility.

The adsorption step is a step to remove a hydrochloride of base that cannot be completely removed via the water washing step, and perform dewatering, decoloring and deodorizing. A known adsorbent may be used, and a multiple of adsorbents may be used in combination. As such adsorbent, preferred are a desiccant such as magnesium sulfate and sodium sulfate; an activated carbon; and the KYOWAAD series (by Kyowa Chemical Industry Co., Ltd.).

It is preferred that the component (A) be a liquid and have a weight-average molecular weight of 200 to 10,000, more preferably 300 to 5,000 when measured by gel permeation chromatography (GPC). A molecular weight smaller than 200 may lead to a poor degradability, and a molecular weight larger than 10,000 will make it difficult to prepare the rubber particles. It is preferred for ease of manufacturing that (A) the silicone-polyester copolymer having at least two radically polymerizable unsaturated groups per molecule be represented by the general formula (6):

[Chemical formula 16]

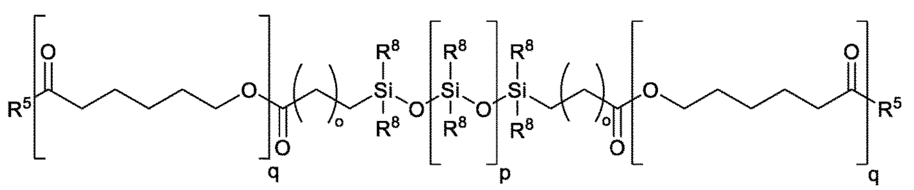

— (6) .

In the formula (6), each $R^5$ independently represents a radically polymerizable functional group-containing organic group represented by the formula (5a) or (5b). Each $R^8$ independently represents a substituted or unsubstituted monovalent hydrocarbon group having 1 to 30 carbon atoms. Specific examples of the monovalent hydrocarbon group

having 1 to 30 carbon atoms include those identical to those as listed for $R^1$, and preferable example of it is a methyl group. The "o", "p" and "q" respectively satisfy $0 \leq o \leq 10$, $0 \leq p \leq 1000$ and $1 \leq q \leq 30$, and preferably $1 \leq o \leq 10$, $1 \leq p \leq 500$ and $2 \leq q \leq 10$.

[Manufacturing method of rubber particles]

The rubber particles of the present invention may, for example, be produced by a method having the following steps (i) to (iii) of:

(i) adding a surfactant-containing water phase component to an oil phase component and performing stirring to prepare an O/W type emulsion, the oil phase containing (A) a silicone-polyester copolymer having at least two radically polymerizable unsaturated groups per molecule;
(ii) curing the components (A) in the O/W type emulsion via radical polymerization under the presence of a radical polymerization initiator (B) to obtain (C) a rubber particle water dispersion; and
(iii) drying and removing water as a continuous phase of (C) the rubber particle water dispersion obtained in the step (ii) to obtain rubber particles.

The components to be used in the steps (i) to (iii) will be described below.

- (A) silicone-polyester copolymer having at least two radically polymerizable unsaturated groups per molecule.

Specific examples of the silicone-polyester copolymer (A) having at least two radically polymerizable unsaturated groups per molecule to be used therein may be those identical to the copolymers as mentioned above.

- Surfactants

There are no particular limitations on the surfactant used in the step (i); there may be used a non-ionic surfactant, an anionic surfactant, a cationic surfactant or an amphoteric surfactant. Any one kind of these surfactants may be used alone, or two or more kinds of them may be used in an appropriately combined manner.

Examples of the non-ionic surfactant used here include polyoxyethylene alkyl ether, polyoxyethylene polyoxypropylene alkyl ether, polyoxyethylene alkylphenyl ether, polyethylene glycol fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, propylene glycol fatty acid ester, polyoxyethylene castor oil, polyoxyethylene hydrogenated castor oil, polyoxyethylene hydrogenated castor oil fatty acid ester, polyoxyethylene alkylamine, polyoxyethylene fatty acid amide, polyoxyethylene-modified organopolysiloxane, and polyoxyethylene-polyoxypropylene-modified organopolysiloxane.

Examples of the anionic surfactant include an alkyl sulfate ester salt such as sodium lauryl sulfate, polyoxyethylene alkyl ether sulfate ester salt, polyoxyethylene alkylphenyl ether sulfate ester salt, alkylbenzene sulfonate salt, polyoxyethylene alkylphenyl ether sulfonate salt, alkyldiphenyl ether disulfonate salt, alkanesulfonate salt, N-acyltaurate salt, dialkyl sulfosuccinate salt, monoalkyl sulfosuccinate salt, polyoxyethylene alkyl ether sulfosuccinate salt, fatty acid salt, polyoxyethylene alkyl ether carboxylate salt, N-acylamino acid salt, monoalkyl phosphate ester salt, dialkyl phosphate ester salt, and polyoxyethylene alkyl ether phosphate ester salt.

Examples of the cationic surfactant include an alkyltrimethylammonium salt, dialkyldimethylammonium salt, polyoxyethylene alkyldimethylammonium salt, dipolyoxyethylene alkylmethylammonium salt, tripolyoxyethylene alkylammonium salt, alkylbenzyl dimethylammonium salt, alkylpyridium salt, monoalkylamine salt, and monoalkyl amidoamine salt.

Examples of the amphoteric surfactant include an alkyldimethylamine oxide, alkyldimethylcarboxybetaine, alkylamidopropyl dimethylcarboxybetaine, alkylhydroxysulfobetaine, and alkylcarboxymethylhydroxyethyl imidazolinium betaine.

It is preferred that the surfactant be a non-ionic surfactant due to the fact that the aforementioned oil phase component can be emulsified with a small amount of such surfactant, and that fine particles can be obtained thereby.

The surfactant is preferably added in an amount of 0.01 to 20 parts by mass, more preferably 0.05 to 10 parts by mass, per 100 parts by mass of the emulsion. An amount smaller than 0.01 parts by mass will incur problems such as one that emulsification is impossible, and one that fine particles cannot be obtained. The amount greater than 20 parts by mass does not enable the particle size to be reduced, nor allows the rubber particles to have enhanced dispersibilities. An amount larger than 20 parts by mass will make it difficult to coat the rubber particles with polyorganosilsesquioxane and/or silica in a later-described manufacturing method of composite particles.

Further, the content of (A) the silicone-polyester copolymer having at least two radically polymerizable unsaturated groups per molecule in this emulsion is preferably 1 to 80 parts by mass, more preferably 10 to 60 parts by mass, per 100 parts by mass of the emulsion. An amount smaller than 1 part by mass is unfavorable in terms of efficiency; an amount larger than 80 parts by mass will make it difficult to obtain the dispersion as a rubber particle water dispersion.

• (B) Radical polymerization initiator

The radical polymerization initiator to be used as the component (B) for radically polymerizing the component (A) may be a normal radical polymerization initiator, and there may be used, for example, a thermal polymerization initiator, a photopolymerization initiator or a redox polymerization initiator depending on the polymerizing method. However, the photopolymerization generates a definite amount of heat by, for example, ultraviolet light irradiation and a certain level of heat will also be generated in accordance with the progress of polymerization reaction which is an exothermic reaction. For this reason, a thermal polymerization initiator may additionally be used even when the photopolymerization is used.

Examples of the thermal polymerization initiator include azo-based initiators such as 2,2'-azobis-(2-methylbutyronitrile), 2,2'-azobis-(2,4-dimethylvaleronitrile), 2,2'-azobisisobutyronitrile, t-butylperoxy-2-ehylhexanoate, 2,2-azobis-(2-amidinopropane) dihydrochloride, 2,2-azobis-(N,N-dimethylene)isobutylamidine dihydrochloride, 2-(carbamoylazo)isobutyronitrile, 2,2-azobis[2-(2-imidazolin-2-yl)propane]dihydrochloride and 4,4-azobis-(4-cyanovaleric acid); persulfates such as sodium persulfate, potassium persulfate and ammonium persulfate; peroxides such as hydrogen peroxide, t-butyl peroxide and methyl ethyl ketone peroxide; perchlorates such as potassium perchlorate and sodium perchlorate.

Examples of the photopolymerization initiator include acetophenone derivatives such as diethoxyacetophenone, 2-hydroxy-2-methyl-1-phenylpropan-1-one, benzil dimethylketal, 4-(2-hydroxyethoxy)phenyl-(2-hydroxy)-2-propyl ketone and 1-hydroxycyclohexyl phenyl ketone; benzoin alkyl ethers such as benzoin methyl ether, benzoyl ethyl ether, benzoin isopropyl ether and benzoin isobutyl ether; benzophenone derivatives such as methyl o-benzoylbenzoate, 4-phenylbenzophenone, 4-benzoyl-4'-methyl-diphenyl sulfide and (4-benzoylbenzyl)trimethylammonium chloride; thioxanthone-based compounds; acylphosphine oxide derivatives such as bis(2,4,6-trimethylbenzoyl)-phenylphosphine oxide and diphenyl(2,4,6-trimethylbenzoyl)-phosphine oxide; azo-based compounds such as 2-hydroxymethylpropionitrile and 2,2'-{azobis(2-methyl-N-[1,1'-bis(hydroxymethyl)-2-hydroxyethyl)propionamide].

Examples of the redox polymerization initiator include families of combinations of the above persulfates or peroxides with reducing compounds such as sulfites, L-ascorbic acid and ferrous salts. It is also possible to use the thermal polymerization initiator and photopolymerization initiator in combination.

The method of polymerizing the component (A) is preferably thermal polymerization or photopolymerization for the sake of emulsion stability to be described later.

An added amount of the component (B) is preferably 0.1 to 10% by mass, more preferably 0.5 to 5% by mass based on the total amount of the component (A).

Step (i)

In the step (i), a surfactant-containing water phase component is added in the amount as mentioned above to an oil phase component that contains the component (A), which is stirred to prepare an O/W type emulsion.

The surfactant may be added to the oil phase component in the form of solution in which the surfactant is solubilized in water in advance, or the surfactant and water may be separately added to the oil phase component.

The radical polymerization initiator as the component (B) may be added to the oil-phase component in this step (i), or alternatively the initiator may be added to the O/W type emulsion obtained in the step (i) before proceeding to the step (ii) to be explained later. Emulsification may be performed using a known emulsifying disperser; as a general emulsifying disperser, there may be listed, for example, a high-speed rotary shear-type mixer such as a homomixer; a high-speed centrifugal radiation-type mixer such as HOMODISPER; a high-pressure injectiontype emulsifying disperser such as a homogenizer; a colloid mill; and an ultrasonic emulsifying machine.

Step (ii)

In the step (ii), the component (A) is radically polymerized in the O/W type emulsion obtained in the step (i) under the presence of (B) the radical polymerization initiator to obtain (C) a rubber particle water dispersion.

When the component (B) is not compounded into the emulsion in the step (i), the component (B) is compounded into the emulsion before supplying it in the step (ii) in the amount as mentioned above.

The component (A) in the oil phase component of the emulsion as prepared in this manner may be cured by the radical polymerization method to obtain a rubber particle water dispersion. For example, polymerization of the silicone-polyester copolymer may be performed via redox polymerization that performs polymerization for 2 to 24 hours at 30 to

70°C or via thermal or photo (UV) polymerization that performs polymerization for 10 to 24 hours at 30 to 80°C. In the case of the photo-polymerization method, the light source and wavelength range for use during the UV irradiation may be those that are well-known in the industry. By using this method, (C) a water dispersion of rubber particles with a volume average particle diameter of 0.1 to 50 μm can be obtained.

Step (iii)

In the step (iii), rubber particles can be obtained by drying and removing water as a continuous phase from (C) the obtained rubber particle water dispersion. The drying and removal of water from (C) the rubber particle water dispersion may for example be carried out by performing heating under a normal or reduced pressure. Specifically, there may be listed, for example, a method where water is removed by leaving the dispersion to stand still under a heated condition; a method where water is removed while stirring and fluidizing the dispersion under a heated condition; a method where the dispersion is sprayed and dispersed into a hot air flow such as that generated by a spray dryer; and a method where a fluid heat medium is utilized. Here, as a pretreatment of this operation, the dispersion may be condensed by a method such as thermal dehydration, filtration separation or decantation; if necessary, the dispersion may also be washed with water and/or an alcohol.

[Composite particles]

There are no particular limitations on the shape of the polyorganosilsesquioxane and/or silica coating the surfaces of the composite particles; in the case of the later-described manufacturing method, it has a granular shape. A smaller particle size thereof is preferred; specifically, a particle size of not larger than 500 nm is preferred. While the organosilsesquioxane and/or silica may coat part of or the entire surface of each rubber particle, it is preferred that the rubber particle be coated in a substantially solid manner throughout the entire surface thereof. Here, the coating condition, shape and particle size can be identified by observing the particle surface via an electron microscope.

[Manufacturing method of composite particles]

The composite particles of the present invention are obtained by, for example, a method having the following steps (i) to (v) of:

(i) adding a surfactant-containing water phase component into an oil phase component that contains (A) a silicone-polyester copolymer having at least two radically polymerizable unsaturated groups per molecule, and performing emulsification to obtain an O/W type emulsion;
(ii) curing the component (A) in the oil phase component in the O/W type emulsion via radical polymerization under the presence of a radical polymerization initiator (B) to obtain (C) a rubber particle water dispersion;
(iii') adding (E) an alkaline substance to (C) the rubber particle water dispersion obtained in the step (ii);
(iv) adding (F) one or more kinds, selected from the organotrialkoxysilane represented by the following general formula (7), the tetraalkoxysilane represented by the following general formula (8) and a hydrolysate thereof, to the rubber particle water dispersion obtained in the step (iii') in which the alkaline substance has been compounded to cause a condensation reaction, whereby the surfaces of the rubber particles are coated with polyorganosilsesquioxane and/or silica to obtain a composite particle water dispersion; and
(v) drying and removing water as a continuous phase from the composite particle water dispersion obtained in the step (iv) to obtain composite particles.

The steps (i) and (ii) in the manufacturing method of the composite particles are similar to the steps (i) and (ii) of the manufacturing method of the rubber particles. Further, in the step (iii'), (D) water may be added as an optional component, and there may also be optionally added at least one kind selected from a cationic surfactant and a cationic water-soluble polymer compound in the step (iv).

The components to be added in the steps (i) to (v) will be described hereunder.

(D) Water

There are no particular limitations on water to be added in the step (iii'), for which a purified water or the like may be used, and it may include water in the rubber particle water dispersion obtained in the step (ii) as well as water that is added as necessary. It is preferred that the amount of water of the component (D) be compounded such that the rubber particle content in the rubber particle water dispersion becomes 1% to 60% by mass.

• (E) Alkaline substance

The alkaline substance to be added in the step (iii') may be any alkaline substance so long as it functions as a catalyst for the hydrolytic condensation reaction of the component (F) to be described below. Specific examples thereof include alkali metal hydroxides such as potassium hydroxide, sodium hydroxide and lithium hydroxide; alkaline-earth metal hydroxides such as calcium hydroxide and barium hydroxide; alkali metal carbonates such as potassium carbonate and sodium carbonate; amines such as ammonia, monomethylamine and dimethylamine; and quaternary ammonium hydroxides such as tetramethylammonium hydroxide. Here, more preferred is ammonia which is superior in water solubility and catalytic activity, and is easily removable via volatilization; there may be used an ammonia water solution that is generally commercially available.

It is preferred that the component (E) be added in an amount at which the pH of the water dispersion obtained in the step (iii') at 25°C becomes in a range of 9.0 to 13.0, more preferably 10.0 to 12.5. A pH lower than 10.0 will result in insufficient progress of the hydrolytic condensation reaction of the component (F) to be described below; a pH higher than 13.0 will result in a higher hydrolyzation speed such that the hydrolytic condensation reaction of the later-described component (F) will occur in parts other than the surfaces of the rubber particles, whereby a low coatability may be observed.

• (F) At least one kind selected from the organotrialkoxysilane represented by the general formula (7), the tetraalkoxysilane represented by the general formula (8) and a hydrolysate thereof

The component (F) to be added in the step (iv) is at least one kind selected from the organotrialkoxysilane represented by the general formula (7), the tetraalkoxysilane represented by the general formula (8) and a hydrolysate thereof.

[Chemical formula 17]

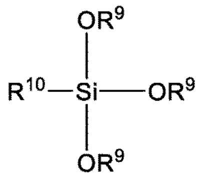

— (7)

In the formula (7), each $R^9$ independently represents an alkyl group having 1 to 6 carbon atoms and $R^{10}$ represents a substituted or unsubstituted monovalent hydrocarbon group having 1 to 20 carbon atoms.

In the formula (8):

$Si(OR^{11})_4$ - (8)

each $R^{11}$ independently represents a monovalent hydrocarbon group having 1 to 6 carbon atoms. The polyorganosilsesquioxane and/or silica coating the rubber particles is formed by adding to the rubber particles at least one kind selected from the organotrialkoxysilane represented by the general formula (7), the tetraalkoxysilane represented by the general formula (8) and a hydrolysate thereof.

In the formula (7), $R^9$ represents an alkyl group having 1 to 6 carbon atoms, and examples of which include a methyl group, an ethyl group, a propyl group and a butyl group. $R^{10}$ in the formula (7) represents a substituted or unsubstituted monovalent hydrocarbon group having 1 to 20 carbon atoms. Examples of the substituted or unsubstituted monovalent hydrocarbon group having 1 to 20 carbon atoms include alkyl groups such as a methyl group, an ethyl group, a propyl group and a butyl group; aryl groups such as a phenyl group and a tolyl group; alkenyl groups such as a vinyl group and an allyl group; aralkyl groups such as a β-phenylethyl group a β-phenylpropyl group; monovalent halogenated hydrocarbon groups such as a chloromethyl group and a 3,3,3-trifluoropropyl group; and groups obtained by substituting these monovalent hydrocarbon groups with an epoxy group, amino group, mercapto group, acryloxy group, methacryloxy group or the like.

In the formula (8), $R^{11}$ is a monovalent hydrocarbon group having 1 to 6 carbon atoms, and specific examples of it include those as listed for $R^9$.

Specific examples of the organotrialkoxysilane and tetraalkoxysilane used for the coating include methyltrimethoxysilane, methyltriethoxysilane, methyltripropoxysilane, methyltributoxysilane, ethyltrimethoxysilane, propyltrimethoxysilane, butyltrimethoxysilane, N-(β-aminoethyl)-γ-aminopropyltrimethoxysilane, γ-glycidoxypropyltrimethoxysilane, vinyltrimethoxysilane, phenyltrimethoxysilane, γ-methacryloxypropyltrimethoxysilane, γ-mercaptopropyltrimethoxysilane, 3,3,3-trifluoropropyltrimethoxysilane, 3,3,4,4,5,5,6,6,6-nonafluorohexyltrimethoxysilane,

3,3,4,4,5,5,6,6,7,7,8,8,9,9,10,10,10-heptadecafluorodecyltrimethoxysilane, tetramethoxysilane, and tetraethoxysilane.

It is preferred that the component (F) be added in an amount of 0.5 to 200, more preferably 1 to 50 parts by mass per 100 parts by mass of the rubber particle in the component (C).

• (G) At least one kind selected from a cationic surfactant and a cationic water-soluble polymer compound

In the step (iv), there may be compounded, in addition to the component (F) as shown above, at least one kind, as the component (G), selected from a cationic surfactant and a cationic water-soluble polymer compound.

The component (G) enables polyorganosilsesquioxane and/or silica to be yielded by promoting the condensation reaction of the hydrolyzed component (F). Further, the component (G) allows the yielded polyorganosilsesquioxane and/or silica to be adsorbed on the surfaces of the rubber particles.

Examples of the cationic surfactant include an alkyltrimethylammonium salt, dialkyldimethylammonium salt, polyoxyethylene alkyldimethylammonium salt, dipolyoxyethylene alkylmethylammonium salt, tripolyoxyethylene alkylammonium salt, alkylbenzyl dimethylammonium salt, alkylpyridium salt, monoalkylamine salt, and monoalkyl amidoamine salt. Among them, an alkyltrimethylammonium salt is preferred, and more preferred are lauryltrimethylammonium salt and cetyltrimethylammonium salt.

Examples of the cationic water-soluble polymer compound include

a polymer of dimethyldiallylammonium chloride, a polymer of vinylimidazoline, a polymer of methylvinylimidazolium chloride, a polymer of ethyltrimethylammonium acrylate chloride, a polymer of ethyltrimethylammonium methacrylate chloride, a polymer of acrylamidopropyltrimethylammonium chloride, a polymer of methacrylamidopropyltrimethylammonium chloride, an epichlorohydrin-dimethylamine polymer, a polymer of ethyleneimine, a quaternized product of an ethyleneimine polymer, a polymer of an allylamine hydrochloride salt, polylysine, a cationic starch, a cationic cellulose, chitosan, and derivatives thereof obtained by for example copolymerizing these compounds with monomers having non-ionic and/or anionic groups. Among these examples, a polymer of dimethyldiallylammonium chloride is preferred.

It is preferred that the component (G) be added in an amount of 0.001 to 2 parts by mass, more preferably 0.005 to 1 parts by mass, per 100 parts by mass of the water in the water dispersion obtained in the step (iii'). An added amount larger than 2 parts by mass may generate polyorganosilsesquioxane and/or silica failing to coat the surfaces of the rubber particles.

Step (iii')

In the step (iii'), (E) an alkaline substance is added in the amount as mentioned above to (C) the rubber particle water dispersion obtained in the step (ii). The manner of adding the component (E) is not particularly limited as long as the component (E) is mixed so as to be uniformly dissolved in (C) the rubber particle water dispersion obtained in the step (ii).

Step (iv)

In the step (iv), by adding (F) at least one kind selected from the organotrialkoxysilane, tetraalkoxysilane and a hydrolysate thereof to the rubber particle water dispersion, obtained in the step (ii) which is the rubber particle water dispersion to which the alkaline substance has been added so as to hydrolyze and condense the organotrialkoxysilane and/or tetraalkoxysilane, and therefore the surfaces of the rubber particles will be coated with the polyorganosilsesquioxane and/or silica. Specifically, hydrolyzation and condensation take place as a result of adding (F) one kind selected from the organotrialkoxysilane, tetraalkoxysilane and a hydrolysate thereof to the water solution prepared by dissolving (E) the alkaline substance and (G) at least one kind (which is optional) selected from a cationic surfactant and a cationic water-soluble polymer compound into (C) the rubber particle water dispersion and (D) water (optional). The condensation product i.e. polyorganosilsesquioxane and/or silica shall coat the surfaces of the rubber particles to form the composite particles.

It is preferred that addition of the organotrialkoxysilane, the tetraalkoxysilane and a hydrolysate thereof of the component (F) be carried out while performing stirring using a normal stirrer such as that equipped with propeller blades, flat plate blades or the like. The organotrialkoxysilane, the tetraalkoxysilane and a hydrolysate thereof are preferably gradually added over time; a drop time is preferably 1 min to 6 hours, more preferably 10 min to 3 hours.

The temperature in the system while performing dropping is preferably 0 to 60°C, more preferably 0 to 40°C. When the temperature is within these ranges, the surfaces of the rubber particles will be able to be coated with polyorganosilsesquioxane and/or silica.

Step (v)

After the hydrolyzation and condensation reaction in the step (iv) is over, the composite particles can be obtained by drying and removing water as a continuous phase from the obtained composite particle water dispersion of the present invention. The removal of water may for example be carried out by heating the reacted water dispersion under a normal or reduced pressure. Specifically, there may be listed, for example, a method where water is removed by leaving the dispersion to stand still under a heated condition; a method where water is removed while stirring and fluidizing the dispersion under a heated condition; a method where the dispersion is sprayed and dispersed into a hot air flow such as that generated by a spray dryer; and a method where a fluid heat medium is utilized. Here, as a pretreatment of this operation, the dispersion may be condensed by a method such as thermal dehydration, filtration separation, centrifugal separation or decantation; if necessary, the dispersion may also be washed with water and/or an alcohol.

If the product obtained by drying and removing water from the reacted water dispersion is agglomerated, this product may be crushed with a crusher such as a jet mill, a ball mill or a hammer mill to obtain the composite particles with the rubber particle surfaces being coated with polyorganosilsesquioxane and silica.

Working Examples

The present invention is described in greater detail hereunder with reference to working and comparative examples; the invention shall not be limited to the following working examples. Further, in these examples, a dynamic viscosity is a value measured at 25°C; "%" indicating concentrations and content rates refers to "% by mass". A penetration degree of a rubber cured product is a value measured in accordance with the standards of the Society of Rubber Science and Technology, Japan (SRIS). The molecular weight of the component (A) is a weight-average molecular weight measured by GPC under the following conditions, with polystyrene being a reference substance.

[Measurement conditions]

Developing solvent: Tetrahydrofuran (THF)
Flow rate: 0.60 mL/min
Detector: Differential refractive index detector (RI)
Column: TSK Guardcolumn Super H-H

TSK gel Super HM-N
TSK gel Super H2500
(All manufactured by Tosoh Corporation)

Column temperature: 40°C
Sample injection volume: 50 μL (THF solution with a concentration of 0.5% by mass)
Working example 1

[Synthesis of poly(ε-caprolactone) acrylate-modified silicone 1]

Here, 300g of carboxy-modified silicone (molecular weight 1200, carboxy equivalent amount: 0.187mol/100g), 202.75 g of poly(ε-caprolactone) monoacrylate (Tradename: PLACCEL FA2D by DAICEL CORPORATION, molecular weight 344, hydroxyl value: 0.291 mol/100g), 200 g of dehydrated toluene and 6.85 g of 4-dimethylaminopyridine (DMAP) were added to a 1 L glass flask equipped with a stirrer, a dropping funnel, a thermometer and a cooling pipe, and mixed together in an ice bath for 10 minutes, followed by using the dropping funnel to deliver thereinto by drops a solution in which 168.9g of N,N'-dicyclohexylcarbodiimide (DCC) was solubilized in 173.63g of dehydrated toluene, and after the dropping, aging was performed for 20 hours at room temperature (i.e., 20°C±10°C which is hereafter referred to as room temperature). After the aging, 200 g of toluene and 300g of 0.5M hydrochloric acid were added for washing, and then water washing was performed using, in a sequential manner, a sodium hydrogen carbonate solution and 10% sodium chloride solution. After the washing, magnesium sulfate, an activated carbon and KYOWAAD 700 (manufactured by Kyowa Chemical Industry Co., Ltd.) were each added thereinto in the amount of 10g, and then shaking was performed for two hours. After the shaking, the magnesium sulfate, activated carbon and KYOWAAD 700 were eliminated via pressure filtration, and 0.09g of dibutylhydroxytoluene (BHT) was added as a polymerization inhibitor, and the solvent was distilled away under the condition at 60°C and 10 mm Hg or lower, thereby obtaining an poly(ε-caprolactone) acrylate-modified silicone 1 (the formula (13) shown below; weight-average molecular weight: 1672).

[Chemical formula 18]

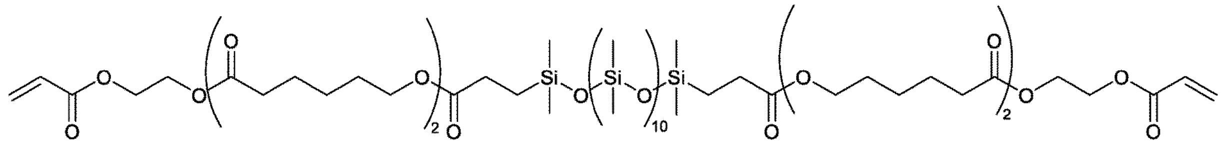

— (1 3)

[Manufacturing of rubber particles]

Here, 120 g of the poly(ε-caprolactone) acrylate-modified silicone 1 as synthesized above and 0.9 g of 2,2'-azobis(2,4-dimethylvaleronitrile) as a radical polymerization initiator were put into a 500 mL container, followed by using a homomixer to stir and dissolve them at 1,500 rpm. Next, as a result of adding 1.8 g of polyoxyethylene lauryl ether and 42 g of water, and then using a homomixer to perform stirring at 5,000 rpm, an O/W type emulsion was obtained and an increase in viscosity was observed, after which stirring was further continued for another 10 min. Next, while performing stirring at 1,500 rpm, 77.1 g of water was used to dilute the emulsion to obtain a white emulsion.

This emulsion was then moved to a 1 L glass flask equipped with a stirrer employing anchor-shaped stirring blades, and 158.2 g of water was added after which the temperature was adjusted to 52°C, and then stirring was performed for 20 hours to obtain a rubber particle water dispersion.

As a result of using an optical microscope to observe the shape of the rubber particles in the water dispersion obtained, it was confirmed that the rubber particles had a spherical shape; and as a result of measuring the volume average particle size thereof by an electrical resistivity method-particle size distribution measurement device (Multisizer 3 by Beckman Coulter Inc.), it was confirmed that the rubber particles had a volume average particle size of 8.3 μm.

After drying the water in the obtained rubber particle water dispersion with a spray dryer whose inlet temperature was set to 150°C and whose outlet temperature was set to 80°C, there were obtained white to light yellow powdery rubber particles.

Further, the hardness of the rubber making up the rubber particles was measured as follows. The poly(ε-caprolactone) acrylate-modified silicone 1 and 2,2'-azobis(2,4-dimethylvaleronitrile) were mixed at the above ratio and then poured into a petri dish of aluminum so that the mixture would have a thickness of 10 mm therein. After leaving the same at 70°C for 30 minutes, there was obtained a non-sticky (non-tacky) planar rubber. The hardness of the planner rubber was 71 as a result of conducting measurement using an Asker C durometer.

Working example 2

[Manufacturing of composite particles]

A rubber particle water dispersion was obtained in a similar manner as the working example 1. Here, 357 g of the rubber particle water dispersion obtained was moved to a 1L glass flask equipped with a stirrer employing anchor-shaped stirring blades, where further added thereto were 489.6 g of water, 15.92 g of 28% ammonia water solution and 0.344 g of 40% dimethyldiallylammonium chloride polymer water solution (Tradename: ME Polymer H40W, manufactured by TOHO Chemical Industry Co.,Ltd.). The pH of the solution at that time was 11.3. After adjusting the temperature to 5 to 10°C, 20 min were spent in delivering thereinto by drops 15.28 g (an amount at which polymethylsilsesquioxane after the hydrolyzation and condensation reaction will be in an amount of 8.7 parts by mass per 100 parts by mass of the rubber particles) of methyltrimethoxysilane, during which the temperature of the solution was maintained at 5 to 10°C, and after which stirring was continued for another hour. Next, the solution was heated to 55 to 60°C and stirred for an hour while maintaining such temperature, thereby completing the hydrolyzation and condensation reaction of methyltrimethoxysilane.

The solution prepared by hydrolyzing and condensing methyltrimethoxysilane in the rubber particle water dispersion was dehydrated to a water content of about 30% using a pressure filtration device. The dehydration product was then moved to a 2L glass flask equipped with a stirrer employing anchor-shaped stirring blades, followed by adding 1,000 g of water thereto to perform stirring for 30 min, after which dehydration was performed using the pressure filtration device. The dehydration product was again moved to the 2L glass flask equipped with the stirrer employing the anchor-shaped stirring blades, followed by adding 1,000 g of water thereto to perform stirring for 30 min, after which dehydration was performed using the pressure filtration device. The dehydration product was dried at 105°C in a hot air flow dryer, and the dried product was then crushed by a jet mill to obtain particles with fluidity.

As a result of observing the obtained particles with an electron microscope, it was confirmed that the particles were composite particles with the rubber particles being coated with a granular polyorganosilsesquioxane throughout

the entire surfaces thereof (polyorganosilsesquioxane-coated rubber particles).

The composite particles obtained were then dispersed in water with a surfactant; and as a result of conducting measurement using the electrical resistivity method-particle size distribution measurement device (Multisizer 3 by Beckman Coulter Inc.), it was confirmed that the particle size distribution was at the same level as the above rubber particle water dispersion, and that the volume average particle size was 8 $\mu$m.

Comparative example 1

[Manufacturing of planar silicone rubber]

Here, 25 g of methylvinylpolysiloxane represented by the following formula (14) and having a dynamic viscosity of 600 $mm^2/s$, and 1 g (an added amount at which there will be 1.1 hydrosilyl groups per 1 vinyl group) of methyl hydrogen polysiloxane represented by the following formula (15) and having a dynamic viscosity of 27 $mm^2/s$ were put into a 100 mL container, and then stirred and dissolved. Next, 0.06 g of a isododecane solution of the complex of platinum/vinyl group-containing disiloxane (platinum content 0.5%) was added thereto to perform stirring, after which the mixture was poured into a petri dish of aluminum so that it would have a thickness of 10 mm therein. After leaving the same at 40°C for two days, there was obtained a planar rubber of a rubber composition of silicone particles. As a result of measuring the rubber hardness in a similar manner as the working example 1, it was confirmed that the hardness of this rubber was 60.

[Chemical formula 19]

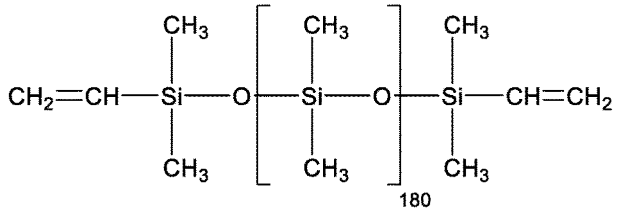

— (1 4)

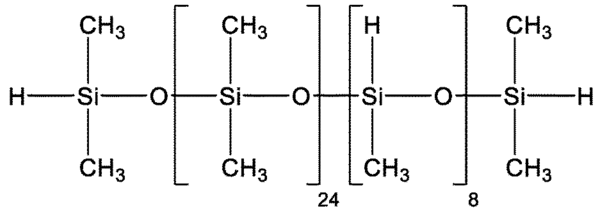

— (1 5)

Working example 3

[Evaluation on hydrolyzability of rubber (measurement of planar rubber hardness over time)]

Hydrolyzability was evaluated by the following method, with regard to the planar rubber (rubber hardness: 71) that was comprised of the poly($\varepsilon$-caprolactone) acrylate-modified silicone 1 obtained in the working example 1 and the planar rubber (rubber hardness: 60) that was obtained in the comparative example 1 and was comprised of the methylvinylpolysiloxane represented by the formula (14) and the methyl hydrogen polysiloxane represented by the formula (15). The two kinds of planar rubber samples were placed and left to stand still in a thermo-hygrostat of a temperature of 70°C and a humidity of 90% (model IW222 by Yamato Scientific Co., Ltd.), and changes in rubber hardness were measured on a day-to-day basis. Further, the planar rubber (rubber hardness: 71) obtained in the working example 1 was left to stand still in a dryer of a temperature of 70°C (model DNE601 by Yamato Scientific Co., Ltd.) and in an environment of room temperature and a humidity of 65% (simulating a usage environment), respectively, where changes in rubber hardness were measured on a day-to-day basis.

[Table 1]

| | Rubber hardness (AskerC) | | | |
|---|---|---|---|---|
| | At the start | 40 days later | 70 days later | 160 days later |
| Working example 1 Rubber sample Temperature 70°C/Humidity 90% | 71 | 67 | 50 | 33 (Partially liquefied) |
| Comparative example 1 Rubber sample Temperature 70°C/Humidity 90% | 60 | 60 | 60 | 60 |
| Working example 1 Rubber sample Temperature 70°C/Humidity 0% | 71 | 71 | 71 | 71 |
| Working example 1 Rubber sample Room temperature /Humidity 65% | 71 | 71 | 71 | 71 |

The planar rubber sample of the working example 1 that was left to stand still in the thermo-hygrostat are assumed to have a hydrolyzability as they each had a structure of the poly(ε-caprolactone), and exhibited a decrease in rubber hardness in the high-temperature and humidity environment of temperature 70°C, humidity 90%. In contrast, the planar rubber sample of the comparative example 1 is assumed to have no degradability as the ingredients thereof making up the rubber do not include one having a hydrolyzable functional group(s), such as polyester, and the rubber hardness thereof was constant even in the high-temperature and humidity environment. As for the planar rubber sample of the working example 1 that was left to stand still in the dryer of 70°C, no decrease in rubber hardness was observed, from which it can be assumed that degradation would not occur unless under the presence of water. As for the planar rubber sample of the working example 1 that was left to stand still in the environment of room temperature and humidity of 65%, simulating a usage environment, no decrease in rubber hardness was observed for a measurement period of 160 days, from which it can be assumed that the sample was stable in the actual usage environment for such measurement period.

Working example 4

[Biodegradability assessment of poly(ε-caprolactone) acrylate-modified silicone 1]

Biodegradability was evaluated based on the degree of biodegration. The degree of biodegration was measured by a method based on the OECD 301F using an activated sludge. The activated sludge used was of a municipal sewage-treatment plant, and the concentration of suspended matter was 2400 mg/L. Sodium benzoate was used as a reference material and the biodegradability was calculated based on the following formula:
[Formula 1]

$$\text{Biodegradability (\%)} = \frac{\text{BOD-B}}{\text{TOD}} \times 100 \qquad -\ (16)$$

BOD: Biochemical oxygen demand of the test suspension or measurement control (measured value) (mg)
B: Average biochemical oxygen demand in the inoculum blank (measured value) (mg)
TOD: Theoretical oxygen demand required when test substance or sodium benzoate is completely oxidized (calculated value) (mg)

The measurements were performed by the method as indicated above for 28 days at the culture temperature of 22±1°C to be found out that the biodegradability of the poly(ε-caprolactone) acrylate-modified silicone 1 after 28 days was on average 26%. This result suggests that the particles after use do not remain in the environment as particles but rather be eventually degraded when the used particles were leaked through terrestrial water directly into the sea.

Working example 5

[Synthesis of poly(ε-caprolactone) acrylate-modified silicone 2]

Synthesis was conducted in a similar manner as in the working example 1, except that 224.57 g of poly(ε-caprolactone) monoacrylate (Tradename: PLACCEL FA4DT by DAICEL CORPORATION, molecular weight 572, hydroxyl value: 0.175 mol/100g)) was used instead of the poly(ε-caprolactone) monoacrylate (Tradename: PLACCEL FA2D by DAICEL CORPORATION), and that the amount of the carboxy-modified silicone was changed from 300 g to 200 g, the amount of 4-dimethylaminopyridine (DMAP) was changed from 6.85 g to 4.52 g, and the amount of N,N'-dicyclohexylcarbodiimide (DCC) was changed from 168.9 g to 77.17 g, and the amount of dehydrated toluene for dissolving the DCC was changed from 173.63 g to 77.17 g. As a result, a poly(ε-caprolactone) acrylate-modified silicone 2 (The formula (17) as shown below, weight-average molecular weight: 2130) was obtained.

[Chemical formula 20]

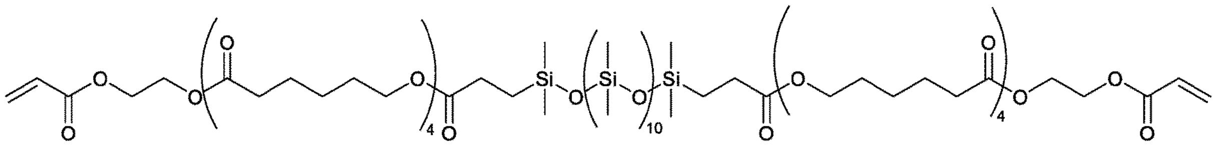

— (17)

[Manufacturing of rubber particles]

A rubber particle water dispersion was obtained in a similar manner as the working example 1, except that the poly(ε-caprolactone) acrylate-modified silicone 2 was used instead of the poly(ε-caprolactone) acrylate-modified silicone 1 that was used in the working example 1. An optical microscope was used to observe the shape of the rubber particles in the water dispersion obtained to be found out that the rubber particles had a spherical shape; and as a result of measuring the volume average particle size thereof by the electrical resistivity method-particle size distribution measurement device (Multisizer 3 by Beckman Coulter Inc.), it was confirmed that the rubber particles had a volume average particle size of 4.2 μm. As is the case with the working example 1, after eliminating water with a spray dryer, there was obtained a white to light yellow powder (FIG. 1). Further, as a result of measuring the hardness of the rubber making up of the rubber particles in a similar manner as the working example 1, it was confirmed that the hardness of this rubber was 75.

Working example 6

In a similar manner as the working example 2, polyorganosilsesquioxane-coated composite particles were obtained from the rubber particle water dispersion obtained in the working example 5. The obtained composite particles were then dispersed in water using a surfactant; and as a result of conducting measurement using the electrical resistivity method-particle size distribution measurement device (Multisizer 3 by Beckman Coulter Inc.), it was confirmed that the particle size distribution was at the same level as the above rubber particle water dispersion, and that the volume average particle size was 5 μm.

As a result of observing the obtained particles with an electron microscope, it was confirmed that the particles were in the form of composite particles with the whole surfaces of the rubber particles being coated with a granular polyorganosilsesquioxane (polyorganosilsesquioxane-coated composite particles)(FIG. 2).

Industrial Applicability

Since the rubber particles and the composite particles have their unique structure and structural composition, it is expected that they are particularly useful for cosmetics, etc. It is also expected that the particles produced in the example 6 exhibit more enhanced degradability than the particle produced in the example 2 because they have higher amount of poly(ε-caprolactone) structure in the molecule.

**Claims**

**1.** A rubber particle comprised of a polymer containing a structural unit derived from (A) a silicone-polyester copolymer

having at least two radically polymerizable unsaturated groups per molecule.

**2.** The rubber particle according to claim 1, wherein (A) the silicone-polyester copolymer having at least two radically polymerizable unsaturated groups per molecule is represented by the general formula (1):

[Chemical formula 1]

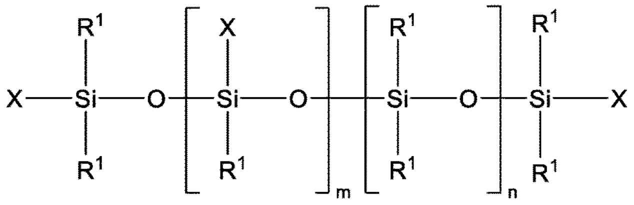

– (1)

wherein in the formula (1), each $R^1$ independently represents a substituted or unsubstituted monovalent hydrocarbon group having 1 to 30 carbon atoms, m is a number satisfying $0 \leq m \leq 1,000$, n is a number satisfying $0 \leq n \leq 1,000$, and each X independently represents a polyester structure-containing group represented by the general formula (2), (2') or (3):

[Chemical formula 2]

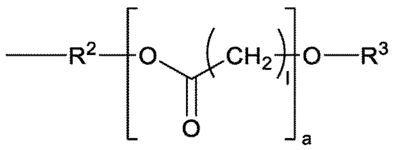

– (2)

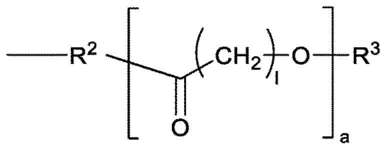

– (2')

wherein in the formulae (2) and (2'), each $R^2$ independently represents a substituted or unsubstituted aliphatic hydrocarbon group that has 1 to 10 carbon atoms and optionally contains a hetero atom, a is a number satisfying $1 \leq a \leq 30$, l is a number satisfying $1 \leq l \leq 10$, and $R^3$ represents a radically polymerizable functional group-containing organic group represented by the general formula (4a), (4b), (4c) or (4d);

[Chemical formula 3]

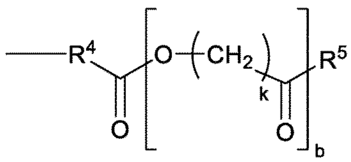

– (3)

wherein in the formula (3), $R^4$ represents a substituted or unsubstituted aliphatic group that has 1 to 10 carbon atoms and optionally contains a hetero atom, b is a number satisfying $1 \leq b \leq 30$, k is a number satisfying $1 \leq k \leq 10$, and $R^5$ represents a radically polymerizable functional group-containing organic group represented by the general formula (5a) or (5b);

[Chemical formula 4]

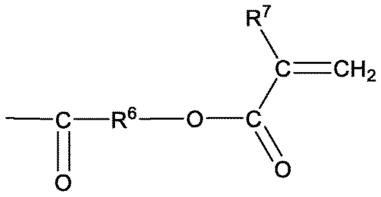

— (4 a)

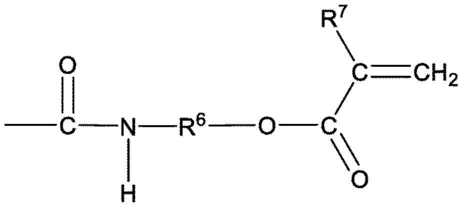

— (4 b)

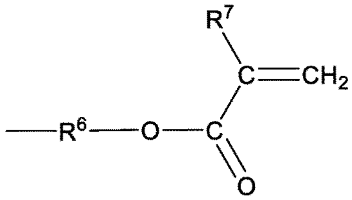

— (4 c)

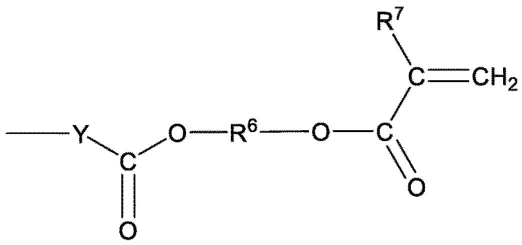

— (4 d)

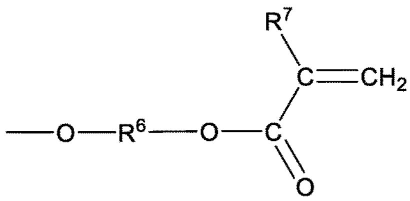

— (5 a)

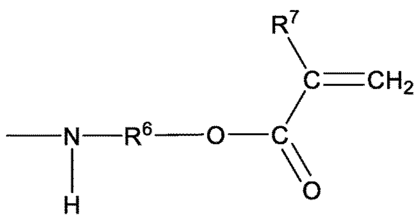

— (5 b)

wherein in the formulae (4a), (4b), (4c), (4d), (5a) and (5b), each $R^6$ independently represents a substituted or unsubstituted hydrocarbon group that has 1 to 20 carbon atoms and optionally contains a hetero atom, $R^7$ represents a hydrogen atom or a hydrocarbon group having 1 to 3 carbon atoms, and Y represents a hydrocarbon group that has 1 to 40 carbon atoms and optionally contains a hetero atom.

**3.** The rubber particle according to claim 1 or 2, wherein (A) the silicone-polyester copolymer having at least two radically polymerizable unsaturated groups per molecule is represented by the general formula (6):

[Chemical formula 5]

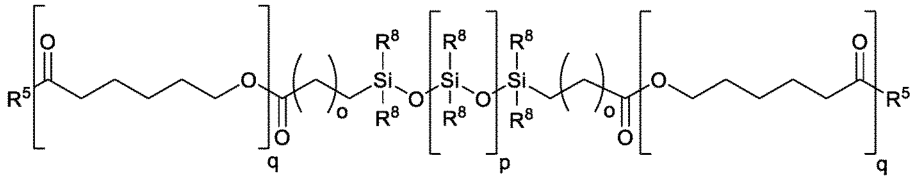

— (6)

wherein in the formula (6), each $R^8$ independently represents a substituted or unsubstituted monovalent hydrocarbon group having 1 to 30 carbon atoms, o is a number satisfying $0 \leq o \leq 10$, p is a number satisfying $0 \leq p \leq 1000$, q is a number satisfying $1 \leq q \leq 30$ and each $R^5$ independently represents a radically polymerizable functional group-containing organic group represented by the formula (5a) or (5b):

[Chemical formula 6]

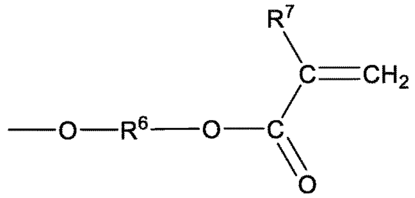

— (5 a)

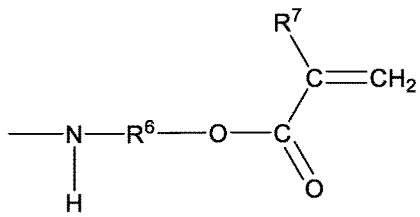

— (5 b)

.

4. The rubber particle according to any one of claims 1 to 3, wherein the rubber particle has a spherical shape and a volume average particle size of 0.1 to 50 μm.

5. A composite particle with the surface of the rubber particle according to any one of claims 1 to 4 being coated with polyorganosilsesquioxane and/or silica.

6. A method for manufacturing the rubber particle according to any one of claims 1 to 4, comprising the steps of:

(i) adding, for emulsification, a surfactant-containing water phase component to an oil phase component that contains (A) the silicone-polyester copolymer having at least two radically polymerizable unsaturated groups per molecule to obtain an O/W type emulsion;
(ii) radically polymerizing the component (A) in the oil phase component of the emulsion under the presence of (B) a radical polymerization initiator to cure the component (A) to obtain (C) a rubber particle water dispersion; and
(iii) drying and removing water, as a continuous phase, from (C) the rubber particle water dispersion obtained in the step (ii) to obtain the rubber particle.

7. A method for manufacturing the composite particle according to claim 5, comprising the steps of:

(i) adding, for emulsification, a surfactant-containing water phase component to an oil phase component that contains (A) the silicone-polyester copolymer having at least two radically polymerizable unsaturated groups per molecule to obtain an O/W type emulsion;
(ii) radically polymerizing the component (A) in the oil phase component of the emulsion under the presence of (B) a radical polymerization initiator to cure the component (A) to obtain (C) a rubber particle water dispersion;

(iii') adding (E) an alkaline substance to (C) the rubber particle water dispersion obtained in the step (ii);
(iv) adding, to the rubber particle water dispersion obtained in the step (iii') in which the alkaline substance has been compounded, (F) at least one kind selected from an organotrialkoxysilane, a tetraalkoxysilane, and hydrolysates thereof whereby a condensation reaction is caused to allow the surface of the rubber particle to be coated with polyorganosilsesquioxane and/or silica to obtain a composite particle water dispersion, the organotrialkoxysilane and the tetraalkoxysilane being respectively represented by the following general formulae (7) and (8):

[Chemical formula 7]

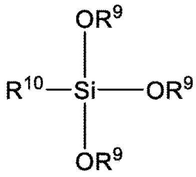

— (7)

wherein in the formula (7), each $R^9$ independently represents an alkyl group having 1 to 6 carbon atoms and $R^{10}$ represents a substituted or unsubstituted monovalent hydrocarbon group having 1 to 20 carbon atoms, and in the formula (8):

$Si(OR^{II})_4$ - (8)

each $R^{11}$ independently represents a monovalent hydrocarbon group having 1 to 6 carbon atoms; and
(v) drying and removing water, as a continuous phase, from the composite particle water dispersion obtained in the step (iv) to obtain a composite particle.

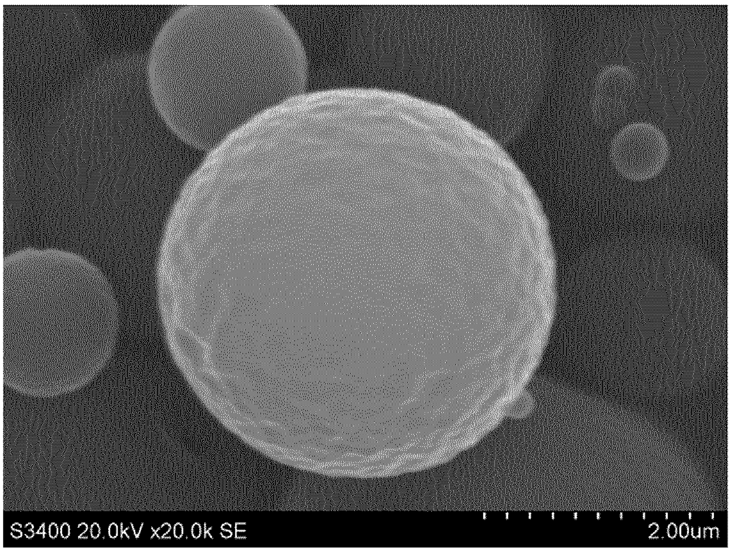


FIG.1

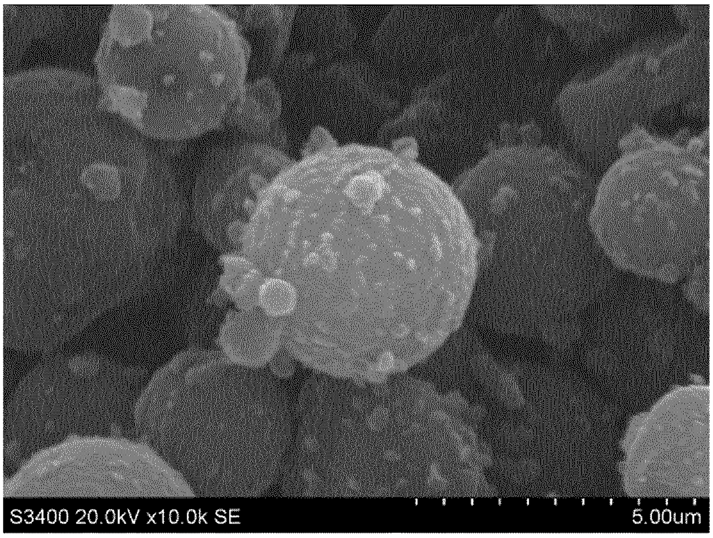


FIG.2

**INTERNATIONAL SEARCH REPORT**

International application No.
**PCT/JP2022/033359**

**A. CLASSIFICATION OF SUBJECT MATTER**

***C08F 299/08***(2006.01)i; ***C08G 77/38***(2006.01)i; ***C08G 77/445***(2006.01)i
FI: C08F299/08; C08G77/38; C08G77/445

According to International Patent Classification (IPC) or to both national classification and IPC

**B. FIELDS SEARCHED**

Minimum documentation searched (classification system followed by classification symbols)

C08F299/08; C08G77/38; C08G77/445

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2009-149880 A (EVONIK GOLDSCHMIDT GMBH) 09 July 2009 (2009-07-09)<br>claims, paragraphs [0050], [0061]-[0068], [0087]-[0133] | 1, 4-7<br>2-3 |
| X<br>A | JP 2013-65768 A (NISSAN CHEMICAL INDUSTRIES, LTD.) 11 April 2013 (2013-04-11)<br>claims, paragraphs [0034], [0040]-[0045] | 1-2, 4<br>3, 5-7 |
| X<br>A | ZHANG, Dawei et al. Poly(ε-caprolactone)-Based Shape Memory Polymers with Variable Polydimethylsiloxane Soft Segment Lengths. Journal of Polymer Science: Part A: Polymer Chemistry, 2011, vol. 49, pp. 754-761<br>in particular, scheme 1 | 1-2, 4<br>3, 5-7 |
| A | JP 2019-502771 A (WACKER CHEMIE AG) 31 January 2019 (2019-01-31) | 1-7 |
| A | JP 2017-206626 A (SHIN-ETSU CHEMICAL CO., LTD.) 24 November 2017 (2017-11-24) | 1-7 |
| A | JP 2007-332213 A (AATEC KK) 27 December 2007 (2007-12-27) | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/033359**

**C. DOCUMENTS CONSIDERED TO BE RELEVANT**

| Category* | Citation of document, with indication, where appropriate, of the relevant passages | Relevant to claim No. |
|---|---|---|
| A | JP 9-87338 A (SHIN-ETSU CHEMICAL CO., LTD.) 31 March 1997 (1997-03-31) | 1-7 |
| A | JP 62-43412 A (NIPPON PAINT CO., LTD.) 25 February 1987 (1987-02-25) | 1-7 |
| A | JP 61-7333 A (GENERAL ELECTRIC CO.) 14 January 1986 (1986-01-14) | 1-7 |

Form PCT/ISA/210 (second sheet) (January 2015)

**INTERNATIONAL SEARCH REPORT**
**Information on patent family members**

International application No.
**PCT/JP2022/033359**

| Patent document cited in search report | Publication date (day/month/year) | Patent family member(s) | Publication date (day/month/year) |
|---|---|---|---|
| JP 2009-149880 A | 09 July 2009 | US 2009/0149573 A1<br>claims, paragraphs [0057], [0068]-[0075], [0096]-[0140]<br>EP 2067811 A1<br>DE 102007058713 A1<br>CN 101497682 A<br>CA 2645956 A1 | |
| JP 2013-65768 A | 11 April 2013 | (Family: none) | |
| JP 2019-502771 A | 31 January 2019 | US 2018/0305576 A1<br>WO 2017/089426 A1<br>DE 102015223246 A1<br>CN 108290969 A<br>KR 10-2018-0074747 A | |
| JP 2017-206626 A | 24 November 2017 | US 2017/0335076 A1<br>KR 10-2017-0131248 A<br>TW 201809039 A | |
| JP 2007-332213 A | 27 December 2007 | (Family: none) | |
| JP 9-87338 A | 31 March 1997 | (Family: none) | |
| JP 62-43412 A | 25 February 1987 | (Family: none) | |
| JP 61-7333 A | 14 January 1986 | US 4539379 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7196815 A
- JP 4348143 A
- JP 2001040214 A
- JP 10182987 A